# EUROPÄISCHE PATENTSCHRIFT

(11) **EP 2 273 282 B1**
(45) Veröffentlichungstag und Bekanntmachung des Hinweises auf die Patenterteilung: **24.12.2014**
(21) Anmeldenummer: 10162371.8
(22) Anmeldetag: 10.05.2010
(51) Int. Cl.: G01S 7/03, G01S 7/35, G01S 13/48

(54) **Bistatischer Radarsensor für Kraftfahrzeuge**
Bistatic radar sensor for motor vehicles
Capteur radar bistatique pour véhicules automobiles

(30) Priorität: 09.07.2009 DE 102009027578
(43) Veröffentlichungstag der Anmeldung: 12.01.2011
(73) Patentinhaber: Robert Bosch GmbH, 70442 Stuttgart (DE)
(72) Erfinder: Brueggemann, Oliver, 75248, Oelbronn-Duerrn (DE); Walter, Thomas, 71272, Renningen (DE); Steinbuch, Dirk, 71299, Wimsheim (DE)

(56) Entgegenhaltungen:
- US-A- 2 977 588
- US-A- 5 757 307

## Beschreibung

### Stand der Technik

Die Erfindung betrifft einen bistatischen Radarsensor für Kraftfahrzeuge, mit mehreren Antennenelementen und einer Sende- und Empfangsschaltung, die eine Mischerfunktion zum Heruntermischen von gesendeten und empfangenen Signalen auf eine Zwischenfrequenz aufweist.

In Kraftfahrzeugen werden häufig 77 GHz Radarsensoren zur Ortung von vorausfahrenden Fahrzeugen eingesetzt. Man unterscheidet zwischen monostatischen Antennenkonzepten, bei denen ein und dieselbe Antenne zum Senden des Radarsignals und zum Empfang des Radarechos dient, und bistatischen Architekturen, bei denen verschiedene Antennenelemente zum Senden und Empfangen vorgesehen sind. Für Kraftfahrzeuganwendungen sind bisher monostatische Antennenkonzepte gebräuchlicher. Die Sende- und Empfangsschaltung wird heute zumeist durch einen MMIC (Microwave Monolithic Integrated Circuit) gebildet, in dem sich die Hochfrequenzschaltungen platzsparend auf einem Chip integrieren lassen.

Bei der Auswertung der Radarsignale erweist es sich als problematisch, daß es zu einem Übersprechen zwischen dem von einem lokalen Oszillator zugeführten und an die Antenne weitergeleiteten Sendesignal und dem empfangenen Signal kommt. Ein solches Übersprechen führt an den Mischerdioden in der Sende- und Empfangsschaltung zu DC-Offsets, die oftmals wesentlich größer sind als die empfangenen Radarsignale selbst. Durch das Auftreten solcher DC-Offsets wird die Dynamik der nachfolgenden Verstärkerstufen und Analog/Digital-Wandlerstufen begrenzt.

Grundsätzlich ist es bekannt, die DC-Offsets durch AC-Kopplung zu unterdrücken. Da jedoch die DC-Offsets in der Regel aufgrund begrenzter Bandbreite von der jeweiligen Sendefrequenz abhängig sind, läßt sich auf diesem Wege eine wirksame Unterdrückung nur dann erreichen, wenn die Sendefrequenz im wesentlichen konstant ist. Bei einem FMCW-Radar (Frequency Modulated Continuous Wave), wie es bei Kraftfahrzeuganwendungen häufig eingesetzt wird, wird jedoch die Sendefrequenz während des laufenden Betriebs rampenförmig moduliert, so daß eine Beseitigung des DC-Offsets durch AC-Kopplung nicht mehr möglich ist. Deshalb entstehen Störsignale, die die Funktionalität des Radarsensors insbesondere im Nachbereich signifikant beeinträchtigen.

### Offenbarung der Erfindung

Aufgabe der Erfindung ist es, einen Radarsensor zu schaffen, der sich durch eine insbesondere im Nahbereich verbesserte Leistungsfähigkeit auszeichnet.

Diese Aufgabe wird erfindungsgemäß dadurch gelöst, daß die Antennenelemente eine Sendeantenne und zwei symmetrisch dazu angeordnete Empfangsantennen umfassen, von denen eine direkt und die andere über ein Phasenumkehrglied mit der Sende- und Empfangsschaltung verbunden ist, die durch Mischen des der Sendeantenne zugeführten Signals mit jedem der von den Empfangsantennen empfangenen Signale zwei Zwischenfrequenzsignale erzeugt, und daß ein Subtraktionsglied vorgesehen ist, daß als Ausgangssignal die Differenz der beiden Zwischenfrequenzsignale ausgibt.

### Vorteile der Erfindung

Die Erfindung benutzt somit eine symmetrische, bistatische Architektur mit drei Kanälen in einer ESE-Konfiguration (Kanal 1 empfängt, Kanal 2 sendet und Kanal 3 empfängt).

Aufgrund der symmetrischen Anordnung der beiden Empfangsantennen in Bezug auf die Sendeantenne hat das Übersprechen in beiden Empfangskanälen den gleichen Effekt, so daß in beiden Kanälen identische DC-Offsets hervorgerufen werden. Da einer der Empfangskanäle das Phasenumkehrglied enthält, sind die Nutzsignale in den beiden Empfangskanälen jedoch gegenphasig. Wenn man nun im Substraktionsglied die Differenz der beiden Zwischenfrequenzsignale bildet, so kommt es zu konstruktiver Interferenz zwischen den Nutzsignalen, während sich die DC-Offsets gegenseitig auslöschen. Auf diese Weise erhält man ein praktisch offsetfreies Zwischenfrequenzsignal, das eine wesentlich höhere Dynamik in den nachgeschalteten Auswertungsstufen ermöglicht.

Insbesondere kann ein solches offsetfreies Signal im Zwischenfrequenzverstärker mit höherer Verstärkung verstärkt werden, ohne daß die Grenzen des Dynamikbereichs des Verstärkers überschritten werden. Ebenso erlaubt es ein offsetfreies Signal, den Dynamikbereich eines nachgeschalteten A/D-Wandlers vollständig auszuschöpfen.

Als besonders vorteilhaft erweist es sich bei Radarsensoren, die mit variabler Frequenz arbeiten, beispielsweise bei einem FMCW-Radar, daß die Unterdrückung des DC-Offsets frequenzunabhängig ist.

### Kurze Beschreibung der Zeichnungen

Ein Ausführungsbeispiel der Erfindung ist in den Zeichnungen dargestellt und in der nachfolgenden Beschreibung näher erläutert.

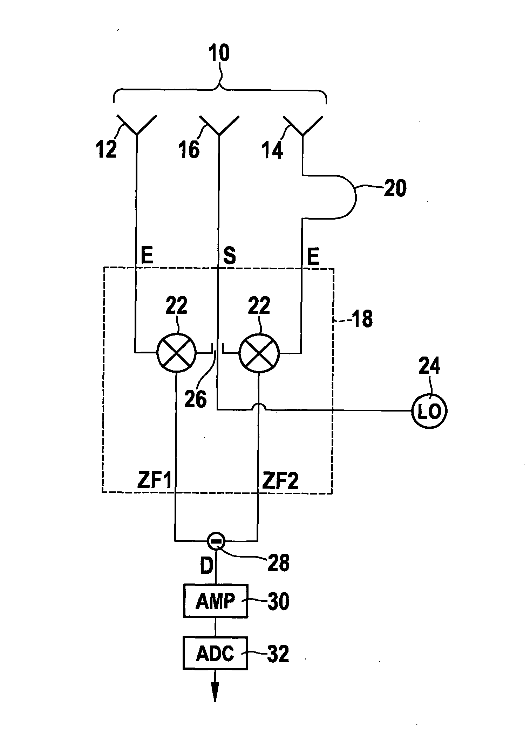

Die einzige Zeichnungsfigur zeigt eine Prinzipskizze eines erfindungsgemäßen Radarsensors

### Ausführungsform der Erfindung

Der in der Zeichnung dargestellte Radarsensor weist drei Antennenelemente 10 auf, nämlich zwei Empfangsantennen 12, 14, die symmetrisch zu einer Sendeantenne 16 angeordnet sind. Die Empfangsantenne 12 und die Sendeantenne 16 sind direkt mit entsprechenden Eingängen E (Empfang) und S (Senden) einer Sende- und Empfangsschaltung 18 verbunden, die beispielsweise durch einen MMIC gebildet wird. Die Empfangsantenne 14 ist über ein Phasenumkehrglied 20, im gezeigten Beispiel eine 180°-Umwegleitung, mit einem weiteren Empfangseingang (E) der Sende- und Empfangsschaltung verbunden.

Auch die Sende- und Empfangsschaltung 18 weist vorzugsweise einen symmetrischen Aufbau auf, so daß die Symmetrie zwischen den beiden Empfangskanälen in Bezug auf den Sendekanal auch innerhalb des MMICs erhalten bleibt. Wie in der Zeichnung symbolisch dargestellt ist, enthält die Sende- und Empfangsschaltung zwei Mischer 22, die jeweils einen Anteil eines von einem lokalen Oszillator (LO) 24 zugeführten Sendesignals mit dem an dem betreffenden Eingang E empfangenen Signal mischen. Auf diese Weise erzeugen die Mischer 22 Zwischenfrequenzsignale ZF1 und ZF2, die an entsprechenden Ausgängen der Sende und Empfangsschaltung 18 anliegen. Im gezeigten Beispiel sind die Mischer 22 über einen Koppler 26 an den Sendepfad gekoppelt, auf dem das Sendesignal vom lokalen Oszillator 24 zur Sendeantenne 16 übermittelt wird. In einer alternativen Ausführungsform könnten die Mischer 22 jedoch auch als Transfermischer ausgebildet sind, denen das Sendesignal direkt zugeführt wird und die dann einen Anteil dieses Sendesignals an die Sendeantenne 16 weiterleiten.

Die Zwischenfrequenzsignale ZF1 und ZF2 enthalten jeweils einen Nutzsignalanteil und einen DC-Offset, der maßgeblich durch Übersprechen zwischen dem Sendepfad und den Empfangspfaden verursacht wird. Aufgrund der symmetrischen Anordnung der Empfangspfade relativ zu dem Sendepfad ist der DC-Offsetanteil in beiden Zwischenfrequenzsignalen identisch, während die Nutzsignale aufgrund der Wirkung des Phasenumkehrgliedes 20 gegenphasig sind.

Die beiden Zwischenfrequenzausgänge der Sende- und Empfangsschaltung 18 sind mit einem Substraktionsglied 28 verbunden, das die beiden Zwischenfrequenzsignale voneinander subtrahiert und ihre Differenz D als Ausgangssignal an einem Zwischenfrequenzverstärker (AMP) 30 ausgibt.

In dem Substraktionsglied 28 werden die beiden gegenphasigen Nutzsignalanteile der Zwischenfrequenzsignale ZF1 und ZF2 konstruktiv überlagert, also addiert, während sich die DC-Offsetanteile gegenseitig auslöschen, so daß die Differenz D ein praktisch offsetfreies Zwischenfrequenzsignal bildet. Dieses Zwischenfrequenzsignal bleibt auch dann offsetfrei, wenn die Frequenz des vom lokalen Oszillator 24 erzeugten Sendesignals variiert wird.

Der Zwischenfrequenzverstärker 30 hat naturgemäß einen begrenzten Dynamikbereich, innerhalb dessen das zugeführte Signal liegen muß, damit es weitgehend verzerrungsfrei verstärkt werden kann. Da dieser Verstärker hier vom Ausgang des Substraktionsgliedes 28 ein offsetfreies Signal erhält, wird sein Dynamikbereich nicht durch einen DC-Offset eingeschränkt, so daß er in vollem Umfang zur Verstärkung des Nutzsignals genutzt werden kann.

Das verstärkte, nach wie vor offsetfreie Signal des Zwischenfrequenzverstärkers 30 kann dann in einem Analog/Digital-Wandler (ADC) 32 digitalisiert werden, wiederum unter optimaler Ausnutzung des Dynamikbereiches dieses Wandlers.

## Patentansprüche

1. Bistatischer Radarsensor für Kraftfahrzeuge, mit mehreren Antennenelementen (10) und einer Sende- und Empfangsschaltung (18), die eine Mischerfunktion zum Heruntermischen von gesendeten und empfangenen Signalen auf eine Zwischenfrequenz aufweist, **dadurch gekennzeichnet, daß** die Antennenelemente (10) eine Sendeantenne (16) und zwei symmetrisch dazu angeordnete Empfangsantennen (12, 14) umfassen, von denen eine (12) direkt und die andere (14) über ein Phasenumkehrglied (20) mit der Sende- und Empfangsschaltung (18) verbunden ist, die durch Mischen des der Sendeantenne (16) zugeführten Signals mit jedem der von den Empfarigsantennen (12, 14) empfangenen Signale zwei Zwischenfrequenzsignale (ZF1, ZF2) erzeugt, und daß ein Substraktionsglied (28) vorgesehen ist, das als Ausgangssignal die Differenz (D) der beiden Zwischenfrequenzsignale ausgibt.

2. Radarsensor nach Anspruch 1, bei dem die Sende- und Empfangsschaltung mindestens einen MMIC aufweist.

## Claims

1. Bistatic radar sensor for motor vehicles, having a plurality of antenna elements (10) and a transmission and reception circuit (18) that has a mixer function for down-converting transmitted and received signals to an intermediate frequency, **characterized in that** the antenna elements (10) comprise a transmission antenna (16) and two reception antennas (12, 14), arranged symmetrically with respect thereto, one (12) of which is connected directly and the other (14) of which is connected via a phase reversal element (20) to the transmission and reception circuit (18), which produces two intermediate frequency signals (ZF1, ZF2) by mixing the signal supplied to the transmission antenna (16) with each of the signals received from the reception antennas (12, 14), and **in that** a subtraction element (28) is provided that outputs the difference (D) between the two intermediate frequency signals as an output signal.

2. Radar sensor according to Claim 1, in which the transmission and reception circuit has at least one MMIC.

## Revendications

1. Capteur radar bistatique pour véhicules automobiles, doté de plusieurs éléments d'antenne (10) et d'un circuit d'émission et réception (18) comportant une fonction de mélangeur servant à mélanger des signaux émis et reçus à une fréquence intermédiaire, **caractérisé en ce que** les éléments d'antenne (10) comprennent une antenne émettrice (16) et deux antennes réceptrices (12, 14) disposées symétriquement par rapport à elle, parmi lesquelles une antenne (12) est directement reliée au circuit d'émission et réception (18) et l'autre antenne (14) y est reliée indirectement via un élément d'inversion de phase (20) produisant deux signaux de fréquence intermédiaire (ZF1, ZF2) par mélange du signal amené à l'antenne émettrice (16) avec chacun des signaux reçus par les antennes réceptrices (12, 14) et qu'un élément de soustraction (28) est prévu envoyant comme signal de sortie la différence (D) des deux signaux de fréquence intermédiaire.

2. Capteur radar selon la revendication 1, dans lequel le circuit d'émission et réception comporte au moins un MMIC.
